# EUROPEAN PATENT APPLICATION

(11) **EP 4 503 249 A1**
(43) Date of publication of application: **05.02.2025**
(21) Application number: 22952509.2
(22) Date of filing: 29.07.2022
(51) Int. Cl.: H01M 10/42, H01M 10/04, H01M 50/289, H01M 50/502, H01M 50/244

(54) **BATTERY AND ELECTRIC DEVICE**

(71) Applicant: Contemporary Amperex Technology (Hong Kong) Limited, Central, Central And Western District (HK)
(72) Inventor: YAO, Pengcheng, Ningde, Fujian 352100 (CN); ZHANG, Wenhui, Ningde, Fujian 352100 (CN); WANG, Peng, Ningde, Fujian 352100 (CN); CHEN, Xingdi, Ningde, Fujian 352100 (CN)
(74) Representative: Gong, Jinping
(86) International application number: PCT/CN2022/109098
(87) International publication number: WO 2024/021062

(57) **Abstract**

Embodiments of the present application provide a battery and an electric apparatus, and the battery includes a battery cell, a control element, and a sound-insulation component. The control element is electrically connected to the battery cell, and the sound-insulation component is provided adjacent to the control element. In the embodiments of the present application, the sound-insulation component is provided inside the battery and on a surface of the control element, so that a sound produced by the control element can be absorbed inside the battery, thereby achieving effective control of noise. Further, most of the noise generated by the control element is not transmitted into a vehicle through a vehicle chassis, so that the noise inside the vehicle can be reduced, and a riding experience of a passenger can be improved.

## Description

### TECHNICAL FIELD

The present application relates to the technical field of batteries, and more particularly, to a battery and an electric apparatus.

### BACKGROUND

At present, in an electrical apparatus such as a vehicle, it is often necessary to provide corresponding power through a battery. However, noise is easily generated during operation of the battery, so that the use of the electrical apparatus is adversely affected.

### SUMMARY

The present application provides a battery and an electric apparatus, which can reduce the noise generated during the operation of the battery.

In a first aspect, embodiments of the present application provide a battery including a battery cell, a control element, a sound-insulation component, and a box body. The box body includes a first accommodating cavity and a second accommodating cavity spaced from each other, and the battery cell is accommodated within the first accommodating cavity. The control element is electrically connected to the battery cell and accommodated within the second accommodating cavity, and the sound-insulation component is provided adjacent to the control element and accommodated within the second accommodating cavity.

In the embodiments of the present application, the sound-insulation component is provided inside the battery and on a surface of the control element, so that a sound produced by the control element can be absorbed inside the battery, thereby achieving effective control of the noise.

In some embodiments, the sound-insulation component has a thickness of H, wherein 0.2mm ≤ H ≤ 50mm.

In the embodiments of the present application, space in the battery is prevented from being wasted while a noise reduction effect is ensured, so as to ensure a higher energy density of the battery and a longer battery life of the battery.

In some embodiments, 0.5mm ≤ H ≤ 10mm. As an example, a value of H is one of 0.5mm, 1mm, 3mm, 5mm, and 10mm.

In some embodiments, the battery has a total weight of M, and H and M satisfy the following relationship: 0.0002mm/kg ≤ H/M ≤ 5mm/kg.

In the above embodiments, the space in the battery is prevented from being wasted while the noise reduction effect is ensured, so as to ensure a higher energy density of the battery.

In some embodiments, 0.0006mm/kg ≤ H/M ≤ 0.1mm/kg. As an example, a value of H/M is one of 0.0006mm/kg, 0.0001mm/kg, 0.001mm/kg, 0.01mm/kg, and 0.1mm/kg.

In some embodiments, the battery further includes the box body including the first accommodating cavity and the second accommodating cavity, the battery cell is accommodated within the first accommodating cavity, and the control element is accommodated within the second accommodating cavity.

In the above embodiments, the battery cell and the control element are accommodated within the first accommodating cavity and the second accommodating cavity separately, that is, the battery cell and the control element are spaced from each other inside the box body. Such a design can prevent physical interference between the battery cell and the control element, and prevent one of the battery cell and the control element from contacting with the other one due to vibration or other factors during operation, thereby improving the safety in use of the battery.

In some embodiments, the box body includes a first wall and a second wall arranged oppositely, the first wall is located between the first accommodating cavity and the second accommodating cavity, and the second wall is located at a side of the second accommodating cavity away from the first accommodating cavity. The control element is installed on the first wall, and at least a part of the sound-insulation component is located between the second wall and the control element.

In the embodiments of the present application, at least a part of the sound-insulation component is provided on a same side of the control element and the battery cell, so that at least a part of noise produced by the battery cell can be absorbed while noise produced by the control element is absorbed, thereby further reducing the effect of noise generated by the battery.

In some embodiments, the box body includes a control box connected to the first wall, the control box is a hollow structure with an opening covered by the second wall, and the second accommodating cavity is formed by being enclosed by the second wall and the control box.

In the embodiments of the present application, the control box is installed on the first wall, and the second wall is installed on the control box, so that the second accommodating cavity used for accommodating the control element and the sound-insulation component is formed in the box body, such a design facilitates maintenance and replacement of the control element and the sound-insulation component.

In some embodiments, the sound-insulation component is spaced apart from the second wall.

In the above embodiments, the sound-insulation component is spaced apart from the second wall to reduce vibration of the sound-insulation component or prevent vibration of the sound-insulation component from being transmitted to the box body, thereby reducing the risk of the battery shaking and improving the safety in use of the battery.

In some embodiments, the first wall and the second wall are oppositely arranged along a first direction. The sound-insulation component covers the control element along the first direction.

In the above embodiments, at least a part of the sound-insulation component is located between the second wall and the control element along the first direction, and the sound-insulation component covers the control element along the first direction, wherein, a size of the sound-insulation component may be slightly greater than a size of the control element, so that the sound-insulation component may slightly protrude from the control element while completely covering the control element, thereby further reducing the noise generated by the control element. Of course, the size of the sound-insulation component may be completely same as the size of the control element, thereby reducing the cost of manufacturing the sound-insulation component, which is not limited by the embodiments of the present application.

In some embodiments, a side of the sound-insulation component facing the first wall is provided with a recess, and at least a part of the control element is accommodated within the recess.

In the above embodiments, a contour size of the sound-insulation component is greater than a contour size of the control element, and the recess is provided in the sound-insulation component, so that at least a partial structure of the control element may be located in the recess, and noise produced by the structure located in the recess may be absorbed by a plurality of inner walls of the recess, thereby improving the noise reduction effect.

In some embodiments, the sound-insulation component is arranged to be attached to the control element.

In the embodiments of the present application, the sound-insulation component is arranged to be attached to the control element, so that the sound-insulation component and the control element are closer to each other, thereby further absorbing the noise produced by the control element and further improving the noise reduction effect.

In some embodiments, the sound-insulation component includes a cushion portion and a noise reduction portion provided at a side of the cushion portion away from the control element.

In the above embodiments, the sound-insulation component includes the cushion portion and the noise reduction portion, so that the sound-insulation component may have a vibration reduction effect while satisfying requirements for noise reduction.

In some embodiments, the sound-insulation component includes foam.

In the above embodiments, a foam material has a series of characteristics of being elastic, light weight, rapid pressure-sensitive fixation, being convenient to use, being easy to bend, ultra-thin volume, and reliable performance, etc. The foam material is added in the sound-insulation component, so that the sound-insulation component satisfies requirements for noise reduction and vibration reduction at the same time, and the foam material does not have an extra effect on overall weight of the battery, thereby facilitating lightweight design of the battery.

In a second aspect, the embodiments of the present application provide an electric apparatus including the battery according to any of the foregoing implementations.

In some embodiments, the electric apparatus includes an installation member, the box body is connected to the installation member, and the second accommodating cavity is located at a side of the first accommodating cavity close to the installation member.

In the embodiments of the present application, the sound-insulation component is additionally provided in the second accommodating cavity, and noise transmitted from the control element to inside the electric apparatus is reduced by the sound-insulation component, thereby improving use reliability of the electric apparatus.

### BRIEF DESCRIPTION OF THE DRAWINGS

The drawings necessary for explaining embodiments are described briefly below to illustrate the technical solutions of the embodiments of the present application more clearly. Obviously, the drawings described below illustrate merely some embodiments of the present application. Other figures can be obtained by those with ordinary skill in the art from those drawings without any inventive efforts.
Fig. 1 is a schematic structural view of a vehicle according to some embodiments of the present application.
Fig. 2 is an exploded schematic view of a partial structure of a battery according to some embodiments of the present application.
Fig. 3 is an exploded schematic view of a partial structure of a battery according to some embodiments of the present application.
Fig. 4 is a schematic structural view of a battery according to some embodiments of the present application.
Fig. 5 is an enlarged schematic structural view of the region Q in Fig. 4.
Fig. 6 is a schematic view of a fitting relationship between a sound-insulation component and a control element in a battery according to some embodiments of the present application.
Fig. 7 is a schematic view of a fitting relationship between a sound-insulation component and a control element in a battery according to some embodiments of the present application.

In the drawings, the drawings are not drawn according to actual scale.

In the drawings:
1000: Vehicle;
100: Battery; 200: Controller; 300: Motor;
10: Battery cell;
20: Control element;
30: Sound-insulation component; 31: Recess; 32: Cushion portion; 33: Noise reduction portion;
40: Box body; 41: First accommodating cavity; 42: Second accommodating cavity; 43: First wall; 44: Second wall; 45: Control box;
X: First direction.

### DETAILED DESCRIPTION

In order to make the objects, technical solutions and advantages of embodiments of the present application clearer, the technical solutions of the embodiments of the present application will be described clearly in conjunction with the drawings in the embodiments of the present application. Obviously, the described embodiments are a part of the embodiments of the present application, but not all of the embodiments. Based on the embodiments in the present application, all other embodiments obtained by those ordinary skilled in the art without any creative work shall fall within the protection scope of the present application.

Unless otherwise defined, all technical and scientific terms used in the present application have the same meanings as commonly understood by those skilled in the technical field of the present application. In the present application, the terms used in the description of the present application are only for purposes of description of specific embodiments, and are not intended to limit the present application. The terms "comprising" and "having" in the description and claims of the present application and the above brief description of the drawings and any variations thereof are intended to cover non-exclusive inclusions. The terms "first", "second" and the like in the description and claims or the above brief description of the drawings of the present application are used to distinguish different objects, rather than to describe a specific order or primary and secondary relationship.

Reference to "an embodiment" in the present application means that a particular feature, structure or characteristic described in connection with the embodiment may be included in at least one embodiment of the present application. Appearances of the phrase in various places in the description are not necessarily all referring to the same embodiment, nor a separate or alternative embodiment that is mutually exclusive of other embodiments.

In the description of the present application, it should be noted that, unless otherwise expressly specified and limited, the terms "installed", "connected", "connection" and "attached" should be understood in a broad sense, for example, they may refer to a fixed connection, a detachable connection or an integral connection, which may be a direct connection, an indirect connection via an intermediate medium, or an internal communication between two elements. For those of ordinary skill in the art, the specific meanings of the above-mentioned terms in the present application can be understood in accordance with specific conditions.

The term "and/or" in the present application is only a kind of association relationship that describes associated objects, which indicates three possible kinds of relationships. For example, A and/or B may indicate the following three cases: A exists alone, A and B exist simultaneously, and B exists alone. In addition, the character "/" in the present application generally indicates that the associated objects have an "or" relationship.

In the embodiments of the present application, the same reference numerals denote the same components, and for brevity, in different embodiments, detailed descriptions of the same components are omitted. It should be understood that dimensions, such as a thickness, a length and a width, and the like, of various components in the embodiments of the present application shown in the drawings, as well as an overall thickness, a length and a width, and the like, of an integrated apparatus are only exemplary descriptions, and should not constitute any limitation to the present application.

The "plurality" that appears in the present application refers to two or more (including two).

In the present application, a battery cell may include a lithium ion secondary battery cell, a lithium ion primary battery cell, a lithium sulfur battery cell, a sodium lithium ion battery cell, a sodium ion battery cell, a magnesium ion battery cell, or the like, which is not limited in the embodiments of the present application. The battery cell may be in the shape of a cylinder, a flat body, a cuboid, or other shapes, which is not limited in the embodiments of the present application.

A battery mentioned in the embodiments of the present application refers to a single physical module including one or more battery cells to provide a higher voltage and a higher capacity. For example, the battery mentioned in the present application may include a battery, a battery pack, or the like. A battery typically includes a box body for enclosing one or more battery cells. The box body can prevent liquids or other foreign objects from affecting the charging or discharging of the battery cells.

The battery cell includes an electrode component and electrolyte, and the electrode component includes a positive electrode plate, a negative electrode plate and a separating film. The operation of the battery cell mainly relies on a movement of metal ions between the positive electrode plate and the negative electrode plate. The positive electrode plate includes a positive electrode current collector and a positive electrode active material layer, and the positive electrode active material layer is coated on a surface of the positive electrode current collector, the positive electrode current collector uncoated with the positive electrode active material layer protrudes from the positive electrode current collector coated with the positive electrode active material layer, and the positive electrode current collector uncoated with the positive electrode active material layer serves as a positive electrode tab. Taking a lithium ion battery as an example, a material of the positive electrode current collector may be aluminum, the positive electrode active material may be lithium cobalt oxide, lithium iron phosphate, ternary lithium or lithium manganate, or the like. The negative electrode plate includes a negative electrode current collector and a negative electrode active material layer, and the negative electrode active material layer is coated on a surface of the negative electrode current collector, the negative electrode current collector uncoated with the negative electrode active material layer protrudes from the negative electrode current collector coated with the negative electrode active material layer, and the negative electrode current collector uncoated with the negative electrode active material layer serves as a negative electrode tab. A material of the negative electrode current collector may be copper, and the negative electrode active material may be carbon or silicon, or the like. In order to ensure a fusing does not occur under a condition that a large current passes, there are a plurality of positive electrode tabs which are stacked and a plurality of negative electrode tabs which are stacked. A material of a membrane may be Polypropylene (PP) or polyethylene (PE), or the like. In addition, the electrode component may be a wound structure or a stacked structure, which is not limited in the embodiments of the present application.

For an electric apparatus such as a vehicle, the applicants have noted that loud noise tends to be generated during use of the battery, thereby affecting use of the electric apparatus.

The applicants have found that, for the electric apparatus such as the vehicle, the noise is caused due to the reason that it often needs to be used with the battery and a control element at the same time. In order to facilitate maintenance and replacement of the control element, the control element is often provided in the battery, thereby causing that the control element and a vehicle chassis are very close to each other. When the battery operates, the control element in the battery also starts operating, and noise generated during the operation of the control element is directly transmitted into the vehicle, causing that the noise in the vehicle increases.

Based on the above problems discovered by the applicants, the present application provides a battery including a battery cell, a control element, a sound-insulation component, and a box body. The box body includes a first accommodating cavity and a second accommodating cavity spaced from each other, and the battery cell is accommodated within the first accommodating cavity. The control element is electrically connected to the battery cell and accommodated within the second accommodating cavity, and the sound-insulation component is provided adjacent to the control element and accommodated within the second accommodating cavity.

In the embodiments of the present application, the sound-insulation component is provided inside the battery and on a surface of the control element, so that a sound produced by the control element can be absorbed inside the battery, thereby achieving effective control of the noise.

The technical solutions described in the embodiments of the present application are applicable to an electrical apparatus using a battery, such as a battery car, an electric vehicle, a ship, a spacecraft, an electric toy, or an electric tool. The spacecraft is, for example, an airplane, a rocket, a space shuttle, or a spaceship. The electric toy includes, for example, a stationary or mobile electric toy, such as, an electric toy car, an electric toy ship or an electric toy aircraft. The electric tool includes, for example, a metal electric cutting tool, an electric grinding tool, an electric assembling tool or a railway electric tool, such as an electric drill, an electric grinder, an electric wrench, an electric screwdriver, an electric hammer, an electric impact drill, a concrete vibrator or an electric planer.

The battery cell described in the embodiments of the present application are not only limited to be applicable to the above electric apparatus, but for the sake of brevity, the following embodiments will be described using an electric vehicle as an example.

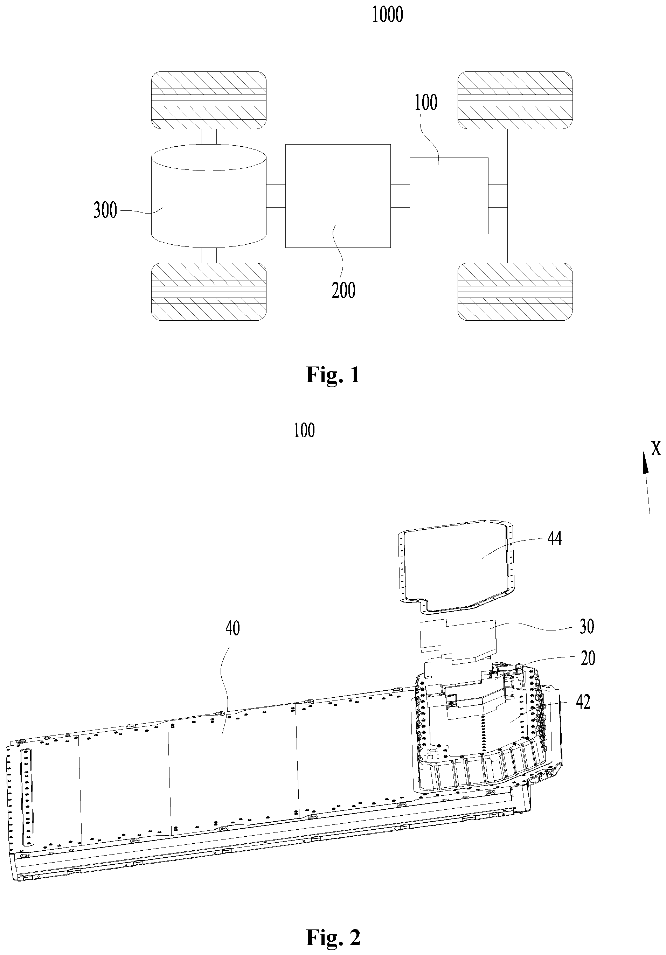

With reference to Fig. 1, the vehicle 1000 may be a fuel vehicle, a gas vehicle, or a new energy vehicle. The new energy vehicle may be a pure electric vehicle, a hybrid electric vehicle, or an extended-range electric vehicle. The battery 100 may be provided inside the vehicle 1000, and specifically, for example, the battery 100 may be provided at the bottom or the front or the rear of the vehicle 1000. The battery 100 may be used for supplying power to the vehicle 1000, for example, the battery 100 may be used as a manipulating power source of the vehicle 1000. The vehicle 1000 may further include a controller 200 and a motor 300. The controller 200 is configured to, for example, control the battery to supply power to the motor 300. The battery may be configured to start and navigate the vehicle 1000. Of course, the battery 100 may further be configured to drive the vehicle 1000 to move, and completely or partly replace fuel or natural gas to provide driving power to the vehicle 1000.

The structure of the battery will be described in detail below with reference to the drawings.

The embodiments of the present application provide a battery. With reference to Fig. 2 to Fig. 5, the battery includes a battery cell 10, a control element 20, a sound-insulation component 30 and a box body 40. The box body 40 includes a first accommodating cavity 41 and a second accommodating cavity 42 spaced from each other, and the battery cell 10 is accommodated within the first accommodating cavity 41. The control element 20 is electrically connected to the battery cell 10 and accommodated within the second accommodating cavity 42, and the sound-insulation component 30 is provided adjacent to the control element 20 and accommodated within the second accommodating cavity 42.

The expression "the sound-insulation component 30 is provided adjacent to the control element 20" mentioned in the embodiments of the present application means that the sound-insulation component 30 is provided closer to the control element 20 than the battery cell 10, and the control element 20 and the sound-insulation component 30 may contact with each other or may be spaced apart from each other, which is not limited by the embodiments of the present application.

The box body 40 is configured to carry and protect the battery cell 10 and the control element 20 inside the battery, so as to reduce the problems such as bump and breakage of the battery cell 10 or the control element 20 occur when the battery cell 10 or the control element 20 is impacted by factors such as the external environment.

The box body 40 at least includes the first accommodating cavity 41 and the second accommodating cavity 42, and the first accommodating cavity 41 and the second accommodating cavity 42 are spaced apart from each other to accommodate different structures in the battery. Herein, the battery cell 10 is located in the first accommodating cavity 41, and the control element 20 and the sound-insulation component 30 are located in the second accommodating cavity 42.

The battery cell 10 is a main component configured to provide power in the battery, and the specific structure of the battery cell 10 is not limited by the embodiments of the present application. The control element 20 is electrically connected to the battery cell 10, and the control element 20 includes but is not limited to relays and other voltage or current controllers. In an example, the control element 20 is electrically connected to a controller in the vehicle and can work for adjusting and protecting a circuit, and so on.

The battery cell 10 and the control element 20 are accommodated within the first accommodating cavity 41 and the second accommodating cavity 42 separately, that is, the battery cell 10 and the control element 20 are spaced from each other inside the box body 40. Such a design can prevent physical interference between the battery cell 10 and the control element 20, and prevent one of the battery cell 10 and the control element 20 from contacting with the other one due to vibration or the like during operation, thereby improving the safety in use of the battery.

It should be noted that, although the battery cell 10 and the control element 20 are spaced apart from each other, the battery cell 10 and the control element 20 may be electrically connected to each other by means of wires and the like.

During operation of the vehicle, the battery cell 10 in the battery are required to provide power for the operation of the vehicle, and meanwhile the control element 20 in the battery is also required to operate to ensure stable operation of the circuitry in the vehicle. In this process, the control element 20 generates a loud sound due to vibration or other factors. However, since the battery is usually fixed to the vehicle chassis, the sound generated by the control element 20 is transmitted into the vehicle through the vehicle chassis, causing that the noise in the vehicle increases, and reducing a riding experience of a passenger in the vehicle.

Based on this, in the embodiments of the present application, the sound-insulation component 30 is added in the battery. The sound-insulation component 30 is provided on a surface of the control element 20, and includes a sound-insulation material, and specific composition of the sound-insulation material is not limited by the embodiments of the present application. The noise generated by operation of the control element 20 first reaches the sound-insulation component 30, and then the sound-insulation component 30 absorbs at least a part of the noise produced by the control element 20, thereby reducing the noise transmitted into the vehicle.

In the embodiments of the present application, the sound-insulation component 30 is provided inside the battery and on a surface of the control element 20, so that a sound produced by the control element 20 can be absorbed inside the battery, thereby achieving the effective control of the noise. Further, most of the noise generated by the control element 20 is not transmitted into the vehicle through the vehicle chassis, so that the noise inside the vehicle can be reduced, and the riding experience of the passenger can be improved.

It should be noted that the position of the sound-insulation component 30 relative to the control element 20 is not limited in the embodiments of the present application. Optionally, the sound-insulation component 30 is provided on a side of the control element 20 close to the vehicle chassis. Specifically, under a condition that the control element 20 is located on a side of the battery cell 10 close to the vehicle chassis, the sound-insulation component 30 may be provided on a side of the control element 20 away from the battery cell 10. Under a condition that the battery cell 10 is located on a side of the control element 20 close to the vehicle chassis, the sound-insulation component 30 may be provided between the battery cell 10 and the control element 20.

In such a design, not only the sound-insulation component 30 absorbs the noise produced by the control element 20, but also the vehicle chassis and the control element 20 are spaced from each other by the sound-insulation component 30, thereby reducing intensity of the vibration of the control element 20 transmitted to the vehicle chassis through the contact.

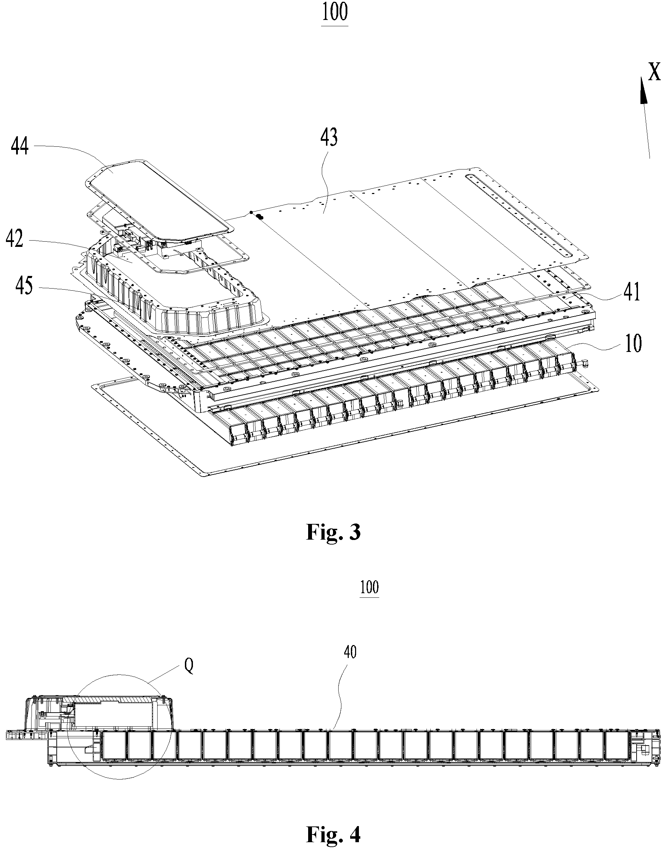

In some embodiments, as shown in Fig. 3 and Fig. 4, a thickness H of the sound-insulation component 30 satisfies the following relationship: 0.2mm ≤ H ≤ 50mm, wherein the thickness of the sound-insulation component 30 refers to a size of the sound-insulation component 30 along a first direction X. In an example, a value of the thickness H of the sound-insulation component 30 is one of 0.2mm, 1mm, 10mm, 30mm, and 50mm.

The sound-insulation component 30 is provided in the battery, and the battery is often fixed on the vehicle chassis. Since the thickness H of the sound-insulation component 30 is generally positively correlated with the noise reduction effect of the sound-insulation component 30, under a condition that the thickness H of the sound-insulation component 30 is excessively small, it shows that the sound-insulation component 30 has a poor noise reduction effect, which is difficult to satisfy the requirements for the noise reduction of the battery. Under a condition that the thickness H of the sound-insulation component 30 is excessively great, it shows that the sound-insulation component 30 needs to occupy excessively large space, which causes an increase in an overall volume of the battery or a decrease in space in the battery which may be occupied by the battery cell 10. The increase in the overall volume of the battery is not beneficial to the installation of the battery on the vehicle chassis and to the lightweight design of the vehicle as a whole. The decrease in the space which may be occupied by the battery cell 10 affects a total storage capacity of the battery, thereby reducing overall mileage of the vehicle.

Therefore, according to the embodiments of the present application and practical requirements, the thickness H of the sound-insulation component 30 is set to be ranged from 0.2mm to 50mm. The space in the battery is prevented from being wasted while the noise reduction effect is ensured, so as to ensure a higher energy density of the battery and a longer mileage of the vehicle. Optionally, the sound-insulation component 30 has the thickness H ranged from 0.5mm to 10mm. In an example, a value of H is one of 0.5mm, 1mm, 3mm, 5mm, and 10mm.

In some embodiments, the battery has a total weight of M, and H and M satisfy the following relationship: 0.0002mm/kg ≤ H/M ≤ 5mm/kg. In an example, a value of H/M is one of 0.0002mm/kg, 0.02mm/kg, 1mm/kg, 3mm/kg, and 5mm/kg.

It may be understood from the foregoing that the excessively great thickness H or the excessively small thickness H of the sound-insulation component 30 may lead to the problems that the battery has different energy densities and the noise reduction effect is poor, respectively. Based on this, the embodiments of the present application further limit a relationship between the thickness H of the sound-insulation component 30 and the total weight M of the battery.

Specifically, under a condition that the H/M is excessively great, it shows that the sound-insulation component 30 has the excessively great thickness or the battery cell 10 has an excessively small capacity, which may lead to the problems such as the space wasted in the battery or an excessively low energy density of the battery. Under a condition that the H/M is excessively small, it shows that with respect to the battery, the sound-insulation component 30 cannot satisfy the noise reduction requirements of the battery, and the noise still exists inside the vehicle.

Therefore, in the embodiments of the present application, the H/M is set to range from 0.0002mm/kg to 5mm/kg, so that the space in the battery is further prevented from being wasted while the noise reduction effect is ensured, which ensures the higher energy density of the battery. Optionally, 0.0006mm/kg ≤ H/M ≤ 0.1mm/kg. In an example, the value of H/M is one of 0.0006mm/kg, 0.0001mm/kg, 0.001mm/kg, 0.01mm/kg, and 0.1mm/kg.

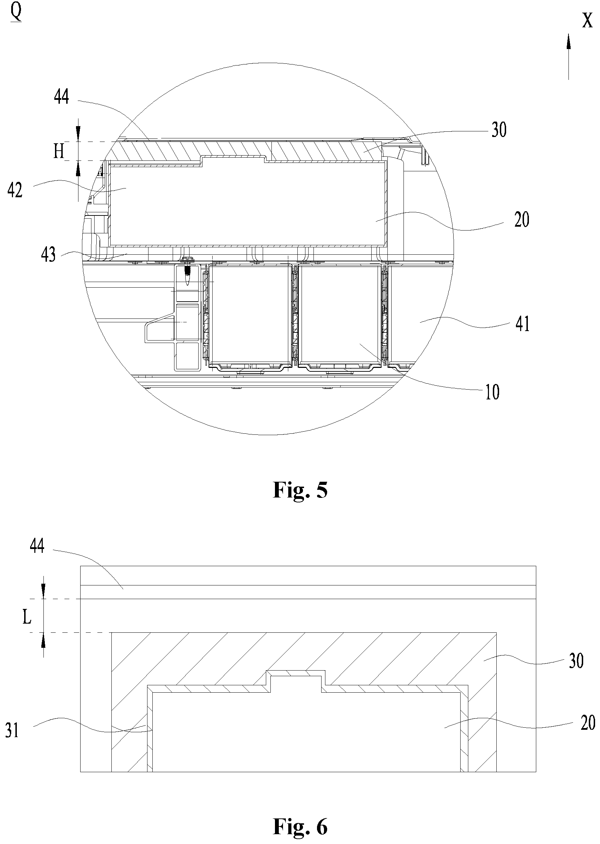

In some embodiments, as shown in Fig. 5, the box body 40 includes a first wall 43 and a second wall 44 arranged oppositely, the first wall 43 is located between the first accommodating cavity 41 and the second accommodating cavity 42, the second wall 44 is located on a side of the second accommodating cavity 42 away from the first accommodating cavity 41. The control element 20 is installed on the first wall 43, and at least a part of the sound-insulation component 30 is located between the second wall 44 and the control element 20.

The first wall 43 is located between the first accommodating cavity 41 and the second accommodating cavity 42, and the first wall 43 can separate the first accommodating cavity 41 and the second accommodating cavity 42, so that the first accommodating cavity 41 and the second accommodating cavity 42 become two separate spaces. Accordingly, the battery cell 10 and the control element 20 are further spaced apart from each other to reduce a risk of interference occurred between the battery cell 10 and the control element 20, thereby improving the safety in use of the battery. Optionally, the wires for electrically connecting the battery cell 10 with the control element 20 are provided through the first wall 43.

The second wall 44 is located on a side of the second accommodating cavity 42 away from the first accommodating cavity 41 and may be used for achieving a connection between the battery and the vehicle chassis, and the connection manners include but are not limited to bonding, welding, bolting, and the like. In addition, in a process for installing the battery on the vehicle, the second wall 44, as a part of the battery, may be installed on the vehicle chassis, or the second wall 44, as a part of the vehicle chassis, may be connected to other structures of the battery in a fixed manner, which is not limited by the embodiments of the present application.

The control element 20 is located in the second accommodating cavity 42 and installed on the first wall 43, and the installation manners include but are not limited to bonding, welding, bolting, and the like. With the control element 20 fixed on the first wall 43, a risk of displacement of the control element 20 due to factors such as shaking of the vehicle is reduced during the movement process of the vehicle, so that the normal use of the control element 20 can be ensured when the vehicle travels to a rough or other dangerous terrain.

At least a part of the sound-insulation component 30 is located between the second wall 44 and the control element 20. It is understood from the foregoing that, the sound-insulation component 30 is provided to reduce the effect of noise generated by the control element 20 on the vehicle, thereby improving the riding experience of the passenger in the vehicle. Based on this, in the embodiments of the present application, at least a part of the sound-insulation components 30 is provided on a side of the control element 20 and the battery cell 10 facing the vehicle chassis, so that while the noise of the control element 20 transmitted into the vehicle is reduced, at least a part of the noise produced by the battery cell 10 may also be absorbed, so as to further reduce the effect of the noise generated in the battery on the vehicle, thereby improving the riding experience of the passenger in the vehicle.

In some embodiments, as shown in Fig. 3, the box body 40 includes a control box 45 connected to the first wall 43, the control box 45 is a hollow structure with an opening covered by the second wall 44, and the second accommodating cavity 42 is formed by being enclosed by the second wall 44 and the control box 45.

The control box 45 is installed on the first wall 43, and the installation manners include but are not limited to welding, bonding, bolting, and the like. The control box 45 is the hollow structure with the opening, wherein the control box 45 may have only one opening at one end, and the opening is covered by the second wall 44; the control box 45 may have two openings at two ends, and the first wall 43 and the second wall 44 respectively cover the two openings of the control box 45.

The second accommodating cavity 42 is formed by being enclosed by the control box 45 and the second wall 44, wherein the control box 45 may be used as a sidewall of the second accommodating cavity 42, and the second wall 44 may be used as a top wall of the second accommodating cavity. The size and shape of the control box 45 are not limited in the embodiments of the present application. In an example, an orthographic projection of the control box 45 on the first wall 43 is located within an outer contour of the first wall 43.

In the embodiments of the present application, the control box 45 is installed on the first wall 43, and the second wall 44 is installed on the control box 45, so that the second accommodating cavity 40 used for accommodating the control element 20 and the sound-insulation component 30 is formed in the box body 40, such a design facilitates maintenance and replacement of the control element 20 and the sound-insulation component 30.

In some embodiments, as shown in Fig. 6, the sound-insulation component 30 is spaced apart from the second wall 44 to reduce vibration from the battery to which the vehicle chassis is subj ected.

Specifically, when the vehicle operates, the battery cell 10 and the control element 20 are also required to operate, and during the operation, in addition to the noise, the control element 20 also generates the vibration and other phenomena. Under a condition that the sound-insulation component 30 is arranged to be attached to the second wall 44, the vibration generated by the control element 20 may be transmitted to the vehicle chassis through the sound-insulation component 30 and the second wall 44, thereby causing the passenger to feel unnecessary shaking, which is not good for the passenger experience.

Accordingly, in the embodiments of the present application, the sound-insulation component 30 is spaced apart from the second wall 44 to reduce vibration of the sound-insulation component 30 or prevent vibration of the sound-insulation component 30 from being transmitted to the vehicle chassis, thereby reducing unnecessary shaking in the vehicle chassis and improving the passenger experience. Optionally, the control element 20 is spaced apart from the sound-insulation component 30 so as to reduce the effect of vibration of the control element 20 on the sound-insulation component 30.

It should be noted that a distance L between the sound-insulation component 30 and the second wall 44 depends on amplitude of the vibration of the sound-insulation component 30 caused by the control element 20, which is not limited by the embodiments of the present application, that is, as long as the sound-insulation component 30 does not contact with the second wall 44 or slightly contacts with the second wall 44 when the sound-insulation component 30 vibrates to maximum amplitude.

In some embodiments, the first wall 43 and the second wall 44 are oppositely arranged along the first direction X. The sound-insulation component 30 covers the control element 20 along the first direction X.

The first wall 43 is spaced apart from the second wall 44 along the first direction X. In an example, the first wall 43 is parallel to the second wall 44, and the first direction X is a thickness direction of the first wall 43 and the second wall 44.

At least a part of the sound-insulation component 30 is located between the second wall 44 and the control element 20 along the first direction X, and the sound-insulation component 30 covers the control element 20 along the first direction X, wherein size of the sound-insulation component 30 may be slightly greater than that of the control element 20, so that the sound-insulation component 30 may slightly protrude from the control element 20 while completely covering the control element 20, thereby further reducing the noise generated by the control element 20. Of course, the size of the sound-insulation component 30 may be completely same as the size of the control element 20, thereby reducing the cost of manufacturing the sound-insulation component 30, which is not limited by the embodiments of the present application.

In addition, a shape of the sound-insulation component 30 is likewise not limited by the embodiments of the present application. In an example, in a manufacturing process, the sound-insulation component 30 is manufactured by shape imitation according to the shape of the control element 20, so that a shape of a contour of the sound-insulation component 30 is same as a shape of a contour of the control element 20.

In the embodiments of the present application, the sound-insulation component 30 covers the control element 20, so that the sound-insulation component 30 can further reduce the noise generated by the control element 20.

In some embodiments, with reference to Fig. 3 and Fig. 6, a side of the sound-insulation component 30 facing the first wall 43 is provided with a recess 31, and at least a part of the control element 20 is accommodated within the recess 31.

The sound-insulation component 30 has a first surface facing the first wall 43, and the first surface is recessed inward to form the recess 31. It is understood from the foregoing that, the sound-insulation component 30 is arranged to cover the control element 20. Based on this, in the embodiments of the present application, the size of the contour of the sound-insulation component 30 is set to be greater than the size of the contour of the control element 20, and the recess 31 is provided in the sound-insulation component 30, so that at least a partial structure of the control element 20 may be located in the recess 31, and the noise produced by the structure located in the recess 31 may be absorbed by a plurality of inner walls of the recess 31, thereby improving the noise reduction effect.

In some embodiments, the control element 20 is completely located in the recess 31. Under this condition, in addition to being absorbed by a portion of the sound-insulation component 30 located between the control element 20 and the second wall 44, the noise produced by the control element 20 may be absorbed by the plurality of inner walls of the recess 31, thereby further improving the noise reduction effect.

In some embodiments, the sound-insulation component 30 is arranged to be attached to the control element 20.

The expression "arranged to be attached to" mentioned in the embodiments of the present application means that the sound-insulation component 30 and the control element 20 contact with each other. In an example, the sound-insulation component 30 and the control element 20 are attached to each other and fixed by the way of bonding and the like. In a process for manufacturing the sound-insulation component 30, the contour of the shape of the sound-insulation component 30 may be adapted to at least one of surfaces of the control element 20 by a way of shape imitation, and the position fixing between the sound-insulation component 30 and the control element 20 may be implemented by the way of bonding and the like.

In the embodiments of the present application, the sound-insulation component 30 is arranged to be attached to the control element 20, so that the sound-insulation component 30 and the control element 20 are closer to each other, thereby further absorbing the noise produced by the control element 20 and further improving the noise reduction effect.

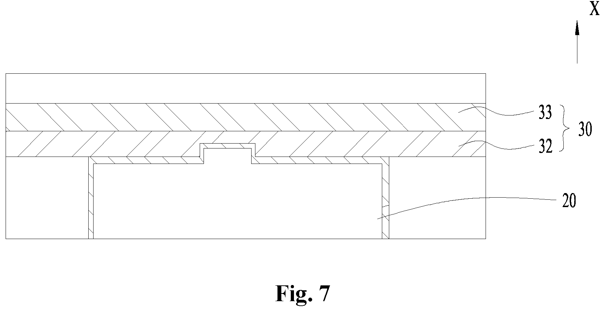

In some embodiments, as shown in Fig. 7, the sound-insulation component 30 includes a cushion portion 32 and a noise reduction portion 33 provided at a side of the cushion portion 32 away from the control element 20.

The sound-insulation component 30 has a main function of noise reduction and sound insulation, reducing the effect of the noise generated by the control element 20 in the battery on the vehicle. However, in the embodiments of the present application, the sound-insulation component 30 includes the cushion portion 32 and the noise reduction portion 33, and the noise reduction portion 33 includes a noise reduction material having a main function of reducing noise. The noise reduction portion 33 is provided closer to the vehicle chassis than the cushion portion 32 so as to effectively absorb or block the noise transmitted from the control element 20 into the vehicle.

The cushion portion 32 includes a cushion material having a main function of cushion. The cushion portion 32 is provided closer to the control element 20 than the noise reduction portion 33, and under a condition that the control element 20 vibrates and contacts with the sound-insulation component 30, the control element 20 contacts with the cushion portion 32, so that the cushion portion 32 can cushion and absorb most of the force generated by the vibration of the control element 20, thereby reducing an effect of the vibration of the control element 20 on the vehicle.

In the embodiments of the present application, the sound-insulation component 30 includes the cushion portion 32 and the noise reduction portion 33, so that the sound-insulation component 30 reduces the vibration while satisfying the requirements for the noise reduction, thereby further improving the riding experience of the passenger during the operation of the vehicle.

In some embodiments, sound-insulation component 30 includes foam. Foam has a series of characteristics of being elastic, light weight, rapid pressure-sensitive fixation, being convenient to use, being easy to bend, ultra-thin volume, and reliable performance, etc. A foam material is added in the sound-insulation component 30, so that the sound-insulation component 30 satisfies the requirements for the noise reduction and the vibration reduction at the same time, and the foam material does not have an extra effect on overall weight of the battery, thereby facilitating the lightweight design of the battery.

In a second aspect, the embodiments of the present application provide an electric apparatus including the battery according to any of the foregoing implementations.

It should be noted that the electric apparatus according to the embodiments of the present application has the beneficial effects of the battery according to any of the foregoing implementations. Details may refer to the foregoing description of the beneficial effects of the battery, which will not be repeated here in the embodiments of the present application.

In some embodiments, the electric apparatus includes an installation member, the box body is connected to the installation member, and the second accommodating cavity is located at a side of the first accommodating cavity close to the installation member.

The box body is installed on the installation member of the electric apparatus. For the vehicle, the installation member is the chassis of the vehicle. The second accommodating cavity is closer to other structures in the electric apparatus than the first accommodating cavity, and the noise generated by the control element located in the second accommodating cavity is easily transmitted to the electric apparatus, thereby affecting normal use of the electric apparatus.

To this end, in the embodiments of the present application, the sound-insulation component is additionally provided in the second accommodating cavity, and noise transmitted from the control element to inside the electric apparatus is reduced by the sound-insulation component, thereby improving use reliability of the electric apparatus.

According to some embodiments of the present application, with reference to Fig. 4, Fig. 5 and Fig. 7, the battery includes the box body 40, the battery cell 10, the control element 20 electrically connected to the battery cell 10, and the sound-insulation component 30. The box body 40 includes the first wall 43, the second wall 44, the first accommodating cavity 41 and the second accommodating cavity 42, the first wall 43 is located between the first accommodating cavity 41 and the second accommodating cavity 42, and the second wall 44 is located on a side of the second accommodating cavity 42 away from the first accommodating cavity 41.

The battery cell 10 is accommodated within the first accommodating cavity 41, the control element 20 is accommodated within the second accommodating cavity 42 and installed on the first wall 43, and at least a part of the sound-insulation component 30 is located between the second wall 44 and the control element 20, and is arranged to cover and be spaced apart from the control element 20. The sound-insulation component 30 includes the cushion portion 32 and the noise reduction portion 33 provided on a side of the cushion portion 32 away from the control element 20.

It should be noted that the embodiments in the present application and the features of the embodiments may be combined with each other in the case of no conflict.

Finally it should be noted that: the above embodiments are only for illustrating technical solutions of the present application, rather than for limiting; although the present application has been described in detail with reference to the foregoing embodiments, those of ordinary skill in the art should understand: it is still possible to modify the technical solutions recited in the foregoing embodiments, or perform equivalent replacements to some of the technical features thereof, however, these modifications or replacements do not make an essence of the corresponding technical solutions deviate from the spirit and scope of the technical solutions of the embodiments of the present application.

## Claims

1. A battery, comprising:
a box body comprising a first accommodating cavity and a second accommodating cavity spaced from each other;
a battery cell accommodated within the first accommodating cavity;
a control element electrically connected to the battery cell and accommodated within the second accommodating cavity; and
a sound-insulation component provided adjacent to the control element and accommodated within the second accommodating cavity.

2. The battery according to claim 1, wherein the sound-insulation component has a thickness of H, wherein 0.2mm ≤ H ≤ 50mm.

3. The battery according to claim 2, wherein 0.5mm ≤ H ≤ 10mm.

4. The battery according to any of claims 1 to 3, wherein the sound-insulation component has a thickness of H, the battery has a total weight of M, wherein H and M satisfy the following relationship: 0.0002mm/kg ≤ H/M ≤ 5mm/kg.

5. The battery according to claim 4, wherein H and M satisfy the following relationship: 0.0006mm/kg ≤ H/M ≤ 0.1mm/kg.

6. The battery according to claim 1, wherein the box body comprises a first wall and a second wall arranged oppositely, the first wall is located between the first accommodating cavity and the second accommodating cavity, and the second wall is located at a side of the second accommodating cavity away from the first accommodating cavity; and
the control element is installed on the first wall, and at least a part of the sound-insulation component is located between the second wall and the control element.

7. The battery according to claim 6, wherein the box body comprises a control box connected to the first wall, the control box is a hollow structure with an opening covered by the second wall, and the second accommodating cavity is formed by being enclosed by the second wall and the control box.

8. The battery according to claim 6, wherein the sound-insulation component is spaced apart from the second wall.

9. The battery according to any of claims 6 to 8, wherein the first wall and the second wall are oppositely arranged along a first direction; and
the sound-insulation component covers the control element along the first direction.

10. The battery according to claim 9, wherein a side of the sound-insulation component facing the first wall is provided with a recess, and at least a part of the control element is accommodated within the recess.

11. The battery according to any of claims 1 to 10, wherein the sound-insulation component is arranged to be attached to the control element.

12. The battery according to any of claims 1 to 11, wherein the sound-insulation component comprises a cushion portion and a noise reduction portion provided at a side of the cushion portion away from the control element.

13. The battery according to any of claims 1 to 12, wherein the sound-insulation component comprises foam.

14. An electric apparatus, comprising the battery according to any of claims 1 to 11, wherein the battery is configured to provide electrical energy.

15. The electric apparatus according to claim 14, wherein the electrical apparatus comprises an installation member, the box body is connected to the installation member, and the second accommodating cavity is located at a side of the first accommodating cavity close to the installation member.
